(19) **Europäisches Patentamt**
**European Patent Office**
**Office européen des brevets**

(11) **EP 4 600 288 A1**

(12) **EUROPEAN PATENT APPLICATION**
published in accordance with Art. 153(4) EPC

(43) Date of publication:
**13.08.2025 Bulletin 2025/33**

(21) Application number: **23874589.7**

(22) Date of filing: **05.09.2023**

(51) International Patent Classification (IPC):
***C08G 63/88*** (2006.01)     ***C08G 63/672*** (2006.01)

(52) Cooperative Patent Classification (CPC):
**C08G 63/672; C08G 63/88**

(86) International application number:
**PCT/JP2023/032380**

(87) International publication number:
**WO 2024/075460 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.10.2022 JP 2022161069**
**05.10.2022 JP 2022161070**

(71) Applicant: **Toyobo Co., Ltd.**
**Kita-ku**
**Osaka-shi, Osaka 530-0001 (JP)**

(72) Inventors:
• INAGAKI, Jun
  Otsu-shi, Shiga 520-0292 (JP)
• IKEUCHI, Yusuke
  Otsu-shi, Shiga 520-0292 (JP)
• MORI, Mei
  Otsu-shi, Shiga 520-0292 (JP)
• ITO, Katsuya
  Osaka-shi, Osaka 530-0001 (JP)

(74) Representative: **Vossius & Partner**
**Patentanwälte Rechtsanwälte mbB**
**Siebertstrasse 3**
**81675 München (DE)**

(54) **POLYESTER RESIN COMPOSITION AND METHOD FOR PRODUCING SAME**

(57)    It is provided that the polyester resin composition which has a relatively high crystallinity and is crystallized also in the interior to substantially the same level as at the surface.

A polyester resin composition comprising a dicarboxylic acid component having furandicarboxylic acid as a main component, and a glycol component having ethylene glycol as a main component, the polyester resin composition having a crystallinity of 5% or more, and absorbance peak heights $I_1$ to $I_4$ in an infrared absorption spectrum that satisfy a formula below

$$|I_1/I_2 - I_3/I_4| \leq 0.20$$

(in the formula, $I_1$ represents an absorbance peak height at around 1340 cm$^{-1}$ at a surface of the polyester resin composition, $I_2$ represents an absorbance peak height at around 1580 cm$^{-1}$ at the surface of the polyester resin composition, $I_3$ represents an absorbance peak height at around 1340 cm$^{-1}$ at a depth of 1 mm from the surface of the polyester resin composition, and $I_4$ represents an absorbance peak height at around 1580 cm$^{-1}$ at a depth of 1 mm from the surface of the polyester resin composition).

**EP 4 600 288 A1**

**Description**

TECHNICAL FIELD

The present invention relates to a polyester resin composition and a method for producing the same.

BACKGROUND ART

Polyester resins such as polyethylene terephthalate (PET) and polybutylene terephthalate (PBT) are thermoplastic resins that are excellent in heat resistance and mechanical properties, and thus are used in a very wide range of fields such as plastic films, electronics, energy, packaging materials, and automobiles.
However, PET and PBT are resins produced from petroleum-derived substances. Therefore, in recent years, from the viewpoint of reducing dependency on petroleum, resins having biodegradability and resins using biomass-derived raw materials have attracted attention as environmentally-friendly or environmentally-sustainable materials that can be substitutes for PET and PBT.
Since furandicarboxylic acid (FDCA), which is a biomass-derived raw material, has a planar structure, structural similarity with terephthalic acid forming PET has been considered.
For example, Patent Document 1 discloses a production method for producing a polyester film after drying under reduced pressure a polyester resin containing a polyethylene furandicarboxylate resin.

CITATION LIST

PATENT DOCUMENTS

Patent Document 1: International Publication No. 2018-159648

SUMMARY OF THE INVENTION

PROBLEMS TO BE SOLVED BY THE INVENTION

When polyester resins are used in desired shapes in various fields, the polyester resins are generally formed into shapes of pellets. Then, the pellets are generally processed into a molded body having a shape according to a usage. Pellets are stored in a storage apparatus such as a hopper or a tank, and are conveyed to a processing apparatus such as an extruder or a molding machine through a conveyance apparatus such as a transport line, to be processed into a molded body. However, when pellets of a polyester resin composed of: a dicarboxylic acid component having furandicarboxylic acid as a main component; and a glycol component having ethylene glycol as a main component are prepared and subjected to drying under reduced pressure as described in Patent Document 1, it was found that the shapes of the pellets cannot be maintained due to fusion caused during drying. As a result, clogging at a raw material inlet of a conveyance apparatus or a processing apparatus and variation in supply amount was also found to be caused.
An object of the present invention is to provide a polyester resin composition of which pellets are less likely to be fused to each other, and of which pellets are less likely to crack or chip during conveyance and during processing.

SOLUTION TO THE PROBLEMS

In order to solve the above problem, the present inventors conducted thorough studies and found the following. That is, when the polyester resin composition is composed of: a dicarboxylic acid component having furandicarboxylic acid as a main component; and a glycol component having ethylene glycol as a main component, the polyester resin composition has a relatively high crystallinity although the resin has a relatively low crystallization rate, and is crystallized also in the interior to substantially the same level as at the surface. Therefore, when the resin composition is in the shape of pellets, fusion between pellets is less likely to occur, and cracking and chipping of pellets are less likely to occur during conveyance and during processing. Then, the present inventors reached the present invention.
That is, the present invention has the following configuration.

[1] A polyester resin composition comprising a dicarboxylic acid component having furandicarboxylic acid as a main component, and a glycol component having ethylene glycol as a main component, the polyester resin composition having a crystallinity of 5% or more, and absorbance peak heights $I_1$ to $I_4$ in an infrared absorption spectrum that satisfy a formula below

$$|I_1/I_2 - I_3/I_4| \leq 0.20$$

(in the formula, $I_1$ represents an absorbance peak height at around 1340 cm$^{-1}$ at a surface of the polyester resin composition, $I_2$ represents an absorbance peak height at around 1580 cm$^{-1}$ at the surface of the polyester resin composition, $I_3$ represents an absorbance peak height at around 1340 cm$^{-1}$ at a depth of 1 mm from the surface of the polyester resin composition, and $I_4$ represents an absorbance peak height at around 1580 cm$^{-1}$ at a depth of 1 mm from the surface of the polyester resin composition).

[2] The polyester resin composition according to the above [1], wherein the crystallinity is 10% or more.

[3] The polyester resin composition according to the above [1] or [2], wherein the $I_3/I_4$ is 0.50 or more.

[4] The polyester resin composition according to any one of the above [1] to [3], having a melting heat amount $\Delta$Hm of 5 J/g or more.

[5] A production method for a polyester resin composition including a dicarboxylic acid component having furandicarboxylic acid as a main component, and a glycol component having ethylene glycol as a main component, wherein a polyester resin material and an inert gas in a supercritical state are caused to coexist, and subjected to heat treatment at a crystallization temperature - 70°C to the crystallization temperature + 10°C.

[6] The production method according to the above [5], wherein
subsequently to the heat treatment, pressure reduction is performed from a gas pressure in the supercritical state to an atmospheric pressure, and a time necessary for the pressure reduction is 0.5 to 20 minutes.

[7] The production method according to the above [5] or [6], wherein the polyester resin composition has absorbance peak heights $I_1$ to $I_4$ in an infrared absorption spectrum that satisfy a formula below

$$|I_1/I_2 - I_3/I_4| \leq 0.20$$

(in the formula, $I_1$ represents an absorbance peak height at around 1340 cm$^{-1}$ at a surface of the polyester resin composition, $I_2$ represents an absorbance peak height at around 1580 cm$^{-1}$ at the surface of the polyester resin composition, $I_3$ represents an absorbance peak height at around 1340 cm$^{-1}$ at a depth of 1 mm from the surface of the polyester resin composition, and $I_4$ represents an absorbance peak height at around 1580 cm$^{-1}$ at a depth of 1 mm from the surface of the polyester resin composition).

[8] The production method according to any one of the above [5] to [7], wherein the polyester resin composition has a crystallinity of 5% or more.

[9] The production method according to the above [7] or [8], wherein the $I_3/I_4$ is 0.50 or more.

[10] The production method according to any one of the above [5] to [9], wherein the polyester resin composition has a melting heat amount $\Delta$Hm of 5 J/g or more.

EFFECTS OF THE INVENTION

In the present invention, it is possible to obtain a resin composition that has an increased crystallinity although the resin composition has a relatively low crystallization rate and that is crystallized also in the interior to substantially the same level as at the surface. When the resin composition is in the shape of pellets, fusion between pellets is less likely to occur, and cracking and chipping of pellets are less likely to occur during conveyance and during processing. Therefore, the resin composition can be appropriately used in many industrial applications.

DESCRIPTION OF EMBODIMENTS

[Configuration of polyester resin composition]

A polyester resin composition of the present invention is composed of: a dicarboxylic acid component having furandicarboxylic acid as a main component; and a glycol component having ethylene glycol as a main component, from the viewpoint of making the polyester resin composition an environmentally-friendly or environmentally-sustainable material. "Main" means that the amount of furandicarboxylic acid is 80 mol% or more in 100 mol% of the entire dicarboxylic acid component, and that the amount of ethylene glycol is 80 mol% or more in 100 mol% of the entire glycol component. In 100 mol% of the entire dicarboxylic acid component, the amount of furandicarboxylic acid is preferably 90 mol% or more, more preferably 95 mol% or more, further preferably 98 mol% or more, and particularly preferably 99 mol% or more. In 100 mol% of the entire glycol component, the amount of ethylene glycol is preferably 90 mol% or more, more preferably 95 mol% or more, further preferably 98 mol% or more, and particularly preferably 99 mol% or more. Polyester resin is a resin obtained through polycondensation of a dicarboxylic acid component and a glycol component, and "100 mol% of the dicarboxylic acid **component**" means that the total amount of all the dicarboxylic acid-derived units in the polyester resin composition is defined as 100 mol%. Similarly, also with respect to each of a glycol component, a polyvalent carboxylic acid component, a polyhydric alcohol component, and the like described later, the total amount of all the corresponding component-derived units in the polyester resin composition is defined as 100 mol%.

As far as the object of the present invention is not hindered, the polyester resin composition of the present invention may contain units derived from dicarboxylic acid components other than furandicarboxylic acid or units derived from glycol components other than ethylene glycol.

Examples of dicarboxylic acid other than furandicarboxylic acid include aromatic dicarboxylic acids such as terephthalic acid, isophthalic acid, phthalic acid, naphthalene dicarboxylic acid, 4,4'-dicarboxybiphenyl, and sodium 5-sulfoisophthalic acid; alicyclic dicarboxylic acids such as 1,4-cyclohexane dicarboxylic acid, 1,3-cyclohexane dicarboxylic acid, 1,2-cyclohexane dicarboxylic acid, 2,5-norbornene dicarboxylic acid, and tetrahydrophthalic acid; and aliphatic dicarboxylic acids such as oxalic acid, malonic acid, succinic acid, adipic acid, azelaic acid, sebacic acid, undecanoic diacid, dodecanoic diacid, octadecanoic diacid, fumaric acid, maleic acid, itaconic acid, mesaconic acid, citraconic acid, and dimer acid. Based on 100 mol% of the total dicarboxylic acid component, the amount of dicarboxylic acid component other than furandicarboxylic acid is 20 mol% or less, preferably 10 mol% or less, more preferably 5 mol% or less, and further preferably 2 mol% or less, and particular preferably 1 mol% or less. When dicarboxylic acid component other than furandicarboxylic acid are used in two or more kinds, the total amount of them is preferably within above range.

As a polycarboxylic acid other than dicarboxylic acid, a small amount of trivalent or higher polycarboxylic acid or hydroxycarboxylic acid may be used in combination. Examples of the polycarboxylic acid include ethane tricarboxylic acid, propane tricarboxylic acid, butane tetracarboxylic acid, pyromellitic acid, trimellitic acid, and trimesic acid, 3,4,3',4'-biphenyltetracarboxylic acid. In the polyester resin composition of the present invention, in 100 mol% of the total polycarboxylic acid component, the amount of trivalent or higher polycarboxylic acid is preferably 10 mol% or less, more preferably 5 mol% or less, further preferably 2 mol% or less, and particularly preferably 0 mol% (that is, trivalent or higher polycarboxylic acid is not contained). When trivalent or higher polycarboxylic acids are used in two or more kinds, the total amount of them is preferably within above range.

Examples of the hydroxycarboxylic acid include lactic acid, citric acid, malic acid, tartaric acid, hydroxyacetic acid, 3-hydroxybutyric acid, p-hydroxybenzoic acid, p-(2-hydroxyethoxy)benzoic acid, and 4-hydroxycyclohexane carboxylic acid. In the polyester resin composition of the present invention, in 100 mol% of a total polycarboxylic acid component, the amount of the hydroxycarboxylic acid is preferably 10 mol% or less, more preferably 5 mol% or less, further preferably 2 mol% or less, and particularly preferably 0 mol% (that is, hydroxycarboxylic acid is not contained). When two or more kinds of the hydroxycarboxylic acids are used, a total amount of them is preferably within above range.

In the description, the term "acid-derived unit" includes not only a unit derived from the acid but also a unit derived from ester-forming derivatives of the acid. Examples of the ester-forming derivatives of the polycarboxylic acid and the hydroxycarboxylic acid include alkyl esters, acid chlorides, and acid anhydrides thereof.

Examples of glycol other than ethylene glycol include aliphatic glycols such as 1,2-propanediol, 1,3-propanediol, 1,2-butanediol, 1,3-butanediol, 1,4-butanediol, 2-methyl-1,3-propanediol, 2-amino-2-ethyl-1,3-propanediol, 2-amino-2-methyl-1,3-propanediol, 1,10-decanediol, dimethyloltricyclodecane, diethylene glycol, and triethylene glycol; ethylene oxide adducts or propylene oxide adducts of bisphenol A, bisphenol S, bisphenol C, bisphenol Z, bisphenol AP, or 4,4'-biphenol; alicyclic glycols such as 1,2-cyclohexanedimethanol, 1,3-cyclohexanedimethanol, and 1,4-cyclohexanedimethanol; and polyethylene glycol; and polypropylene glycol. Based on 100 mol% of the total glycol component, glycol component other than ethylene glycol is 20 mol% or less, preferably 10 mol% or less, more preferably 5 mol% or less, and further preferably 2 mol% or less, and particular preferably 1 mol% or less. When glycol component other than ethylene glycol are used in two or more kinds, the total amount of them is preferably within above range.

As a polyol other than glycol, a small amount of trivalent or higher polyol may be used in combination. Examples of the trivalent or higher polyol include trimethylolmethane, trimethylolethane, trimethylolpropane, pentaerythritol, glycerol, and hexanetriol. In the polyester resin composition of the present invention, in 100 mol% of the total polyol component, the amount of trivalent or higher polyol is preferably 10 mol% or less, more preferably 5 mol% or less, further preferably 2 mol% or less, and particularly preferably 0 mol% (that is, trivalent or higher polyol is not contained). When trivalent or higher polyols are used in two or more kinds, the total amount of them is preferably within above range.

As the mentioned above, since it is preferable to have a small amount of trivalent or higher polycarboxylic acid and hydroxycarboxylic acid, the amount of furandicarboxylic acid is preferably 80 mol% or more, more preferably 90 mol% or more, further preferably 95 mol% or more, particularly preferably 98 mol% or more, and most preferably 99 mol% or more in 100 mol% of the total polycarboxylic acid component. As the mentioned above, since it is preferable to have a small amount of trivalent or higher polyol and the like, the amount of ethylene glycol is preferably 80 mol% or more, more preferably 90 mol% or more, further preferably 95 mol% or more, particularly preferably 98 mol% or more, and most preferably 99 mol% or more in 100 mol% of the total polyol component.

The polyester resin composition of the present invention may contain other resin such as polyamide, polystyrene, and polyolefin as components. From the viewpoint of mechanical properties and heat resistance, the amount of resin other than polyester is preferably 20 mol% or less, more preferably 10 mol% or less, further preferably 5 mol% or less, and even more preferably 2 mol% or less, and most preferably 1 mol% or less, relative to the polyester resin composition. In the present description, the term "polyester resin composition" is used even when resin other than polyester is contained.

The amount of ethylene furandicarboxylate unit is preferably 80 mol% or more, more preferably 90 mol% or more, further preferably 95 mol% or more, particularly preferably 98 mol% or more, and most preferably 99 mol% or more in 100 mol% of the entire constituent units of the polyester resin composition of the present invention.

As far as the object of the present invention is not hindered, the polyester resin composition of the present invention may contain additive. Examples of the additive that may be used in the present invention include the followings in accordance with a purpose of use: inactive particles such as fine particles, heat resistant polymeric particles, and crosslinked polymeric particles; and a fluorescent whitener, an ultraviolet preventing agent, an infrared absorbing colorant, a heat stabilizer, a surfactant, and an antioxidant. One of these additives may be contained, or two or more of them may be contained. The amount of additive is preferably 10 mass% or less, more preferably 5 mass% or less, further preferably 2 mass% or less, and particularly preferably 1 mass% or less, relative to the polyester resin composition. When additives are used in two or more kinds, the total amount of them is preferably within above range.

As the fine particles, any kind of fine particles is selectable. Examples thereof include inorganic particles such as silica, calcium carbonate, barium sulfate, calcium sulfate, alumina, kaolinite, and talc; and other organic particles. From the viewpoint of transparency, silica particles having a refractive index close to that of polyester resin are preferable, and irregular silica is more preferable.

The average particle diameter of the fine particles is preferably from 1 to 10 $\mu$m, more preferably from 1.5 to 7 $\mu$m, and further preferably from 2 to 5 $\mu$m. When the average particle diameter of the finer particles is 1 $\mu$m or more, it is favorably possible to give a surface of the resin composition an irregularity structure suitable for giving easy - slipping properties. On the other hand, when the average particle diameter of the fine particles is 10 $\mu$m or less, it is preferred because the polyester film favorably maintains a high transparency.

As the ultraviolet absorbent, any kind of the ultraviolet absorbent is selectable. Examples thereof include organic ultraviolet absorbents such as benzotriazole-based compounds and benzophenone-based compounds; and inorganic ultraviolet absorbents such as zinc oxide, titanium oxide, and cerium oxide in the form of fine particles having a particle diameter of 0.2 $\mu$m or less. The absorbent can be selected for use from known ultraviolet absorbents in accordance with a purpose of use.

As the antioxidant, any kind of the antioxidant is selectable. Examples thereof include aromatic amine-based antioxidants and phenolic-based antioxidants. Examples of the stabilizer include phosphorus-based stabilizers such as phosphoric acid-based stabilizers and phosphate acid ester-based stabilizers; sulfur-based stabilizers; and amine-based stabilizers.

[Physical properties of polyester resin compound]

The polyester resin composition of the present invention has absorbance peak heights $I_1$ to $I_4$ in an infrared absorption spectrum that satisfy a formula below. It is noted that $I_1/I_2$ and $I_3/I_4$ are values rounded at the third decimal point.

$$|I_1/I_2 - I_3/I_4| \leq 0.20 \quad \text{(Formula 1)}$$

(in the formula 1, $I_1$ represents an absorbance peak height at around 1340 cm$^{-1}$ at a surface of the polyester resin composition of the present invention, $I_2$ represents an absorbance peak height at around 1580 cm$^{-1}$ at the surface of the polyester resin composition of the present invention, $I_3$ represents an absorbance peak height at around 1340 cm$^{-1}$ at a depth of 1 mm from the surface of the polyester resin composition of the present invention, and $I_4$ represents an absorbance peak height at around 1580 cm$^{-1}$ at a depth of 1 mm from the surface of the polyester resin composition of the present invention).

In the following, the surface of the polyester resin composition will be simply referred to as "surface", the place at a depth of 1 mm from the surface of the polyester resin composition will be referred to as "interior", and the value of the left side of formula 1 above will be referred to as "crystal uniformity". In the polyester resin composition of the present invention, the crystal uniformity is 0.20 or less, preferably 0.10 or less, more preferably 0.05 or less, and further preferably 0.03 or less. When the crystal uniformity exceeds 0.20, there is a large difference between the crystalline property at the surface and the crystalline property in the interior, and damage such as cracking and chipping is likely to be caused during conveyance and during processing of the resin composition. The measurement method for $I_1$ to $I_4$ will be described later. The lower limit of the crystal uniformity is not particularly limited, and may be 0.00 ($I_1/I_2$ and $I_3/I_4$ have the same value).

$I_1/I_2$ is preferably 0.65 or more, more preferably 0.70 or more, further preferably 0.75 or more, and particularly preferably 0.80 or more. The upper limit of $I_1/I_2$ is not particularly limited, but is, for example, 0.90 or less.

$I_3/I_4$ is preferably 0.50 or more, more preferably 0.60 or more, further preferably 0.65 or more, even more preferably 0.70 or more, particularly preferably 0.75 or more, and most preferably 0.80 or more. The upper limit of $I_3/I_4$ is not

particularly limited, but is, for example, 0.90 or less.

From the viewpoint of making the crystalline property at the surface and the crystalline property in the interior substantially the same with each other, the polyester resin composition is preferably in the form of pellets. In each pellet, the distance from the deepest portion to the surface is preferably 2.5 mm or less, more preferably 2 mm or less, further preferably 1.5 mm or less, and particularly preferably 1.2 mm or less. The deepest portion means the place farthest from the surface of the pellet. For example, in the case of a columnar pellet having a length of 3 mm and a diameter of 2 mm, the distance from the deepest portion to the surface is 1 mm. In the case of a columnar pellet having a length of 1 mm and a diameter of 2 mm, the distance from the deepest portion to the surface is 0.5 mm. Examples of the shape of the pellet include a columnar shape, a disk shape, an elliptical columnar shape, an elliptical disk shape, a "Go stone" shape, a spherical shape, and an irregular shape. However, from the viewpoint of productivity and handling during molding, the shape of the pellet is preferably a columnar shape. When the pellet has a columnar shape, the diameter is preferably 1 to 5 mm and more preferably 1.5 to 3 mm, and the length is preferably 1 to 10 mm and more preferably 2 to 5 mm.

In the polyester resin composition of the present invention, the crystallinity is 5% or more, preferably 10% or more, more preferably 10 to 50%, further preferably 15 to 40%, particularly preferably 20 to 35%, and most preferably 22 to 30%. When the crystallinity is less than 5%, much damage such as cracking and chipping may occur during conveyance and during processing, and when the polyester resin composition is made into pellets, pellets may be fused to each other. A higher crystallinity is preferable since the heat resistance of the polyester resin composition increases. However, from the viewpoint of molecular structure, the upper limit of the crystallinity is about 50%.

As for the crystallinity, a melting heat amount $\Delta Hm$ (J/g) and a cold crystallization heat amount $\Delta Hc$ (J/g) are measured, and a crystallinity $Xc$ (%) is calculated according to formula 2 below. The value of a complete crystal melting heat amount $\Delta Hm^0$ (J/g) is assumed to be 137 J/g described in Physical Chemistry Chemical Physics, Vol. 16, (England), 2014, p.7946-7958. The measurement methods for the melting heat amount $\Delta Hm$ and the cold crystallization heat amount $\Delta Hc$ will be described later.

$$Xc = 100 \times (\Delta Hm\text{-}\Delta Hc) / \Delta Hm^0 \qquad (\text{Formula 2})$$

From the viewpoint of increasing crystallinity, the melting heat amount $\Delta Hm$ is preferably 5 J/g or more, more preferably 10 J/g or more, 12 J/g or more, 15 J/g or more, 18 J/g or more, 20 J/g or more, 22 J/g or more, 25 J/g or more, 27 J/g or more, and most preferably 30 J/g or more. The upper limit of the melting heat amount $\Delta Hm$ is not particularly limited, but is, for example, 60 J/g or less. If the melting heat amount $\Delta Hm$ is less than 5 J/g, pellets may be fused to each other when the polyester resin composition is made into pellets.

The cold crystallization heat amount $\Delta Hc$ is preferably 3 J/g or less, more preferably 2 J/g or less, further preferably 1 J/g or less, and particularly preferably 0 J/g.

The polyester resin composition of the present invention has an apparent density of preferably 0.8 g/cm$^3$ or more, more preferably 1.0 g/cm$^3$ or more, further preferably 1.2 g/cm$^3$ or more, and particularly preferably 1.4 g/cm$^3$ or more. When the apparent density is less than 0.8 g/cm$^3$, much damage such as cracking and chipping may occur during conveyance of polyester resin composition and during processing of polyester resin composition because there are a large number of voids in the polyester resin composition. The upper limit of the apparent density is not particularly limited, and the apparent density is, for example, 2.0 g/cm$^3$ or less.

Out of ten cylinder-shaped pellets having a length of about 3 mm and a diameter of about 2 mm formed from the polyester resin composition of the present invention, the number of pellets having a shape retention rate after an impact resistance test of 80% or more is preferably five or more and more preferably seven or more. Details of the impact resistance test will be described later.

The polyester resin composition of the present invention has an intrinsic viscosity of preferably 0.3 dl/g to 1.2 dl/g, more preferably 0.4 dl/g to 1.0 dl/g, and further preferably 0.5 dl/g to 0.8 dl/g. If the intrinsic viscosity is lower than 0.3 dl/g, the resin composition is brittle and much damage such as cracking and chipping may occur during conveyance of polyester resin composition and during processing of polyester resin composition. If the intrinsic viscosity is higher than 1.2 dl/g, pressure for filtration of the resin rises during the melting process so that the resin is hard to be filtrated with a high precision, and is hard to be extruded through a filter. In addition, if the intrinsic viscosity is higher than 1.2 dl/g, an effect of the resin composition on improving the mechanical properties of the film is saturated.

The moisture content of the polyester resin composition of the present invention is preferably 200 ppm or less and more preferably 100 ppm or less. If the moisture content exceeds 200 ppm, when the resin composition is made into the shape of pellets, polymer degradation may occur or polymer discharge amount fluctuation due to pressure fluctuation may become large, during the step of processing the pellets into a molded body. The method for causing the moisture content of the polyester resin composition of the present invention to be in the above range is not particularly limited. For example, the polyester resin composition may be dried at normal temperature or may be dried by using hot air. A lower moisture content is preferable because resin degradation is more inhibited, but a practical lower limit is 1 ppm. **In** each of Examples and Comparative Examples described later, the moisture content is 100 ppm or less.

In the polyester resin composition of the present invention, the crystallization temperature is preferably 150 to 180°C and more preferably 160 to 175°C. When the crystallization temperature is 150°C or more, the crystallinity of the resin composition is easily increased, and the heat resistance becomes excellent. On the other hand, when the crystallization temperature is 180°C or less, the crystallinity easily becomes uniform between at the surface and in the interior of the resin composition.

The intrinsic viscosity and the crystallization temperature are values unique to the resin composition, and are physical properties that hardly change before and after a crystallization process described later.

[Production method for polyester resin composition]

A production method for the polyester resin composition of the present invention will be described, but the production method is not limited to the method below.

The production method for the polyester resin composition is not particularly limited. For example, it is possible to use any production method such as: a direct esterification method in which direct reaction is caused between furandicarboxylic acid and ethylene glycol, and, as necessary, other dicarboxylic acid component or glycol component, etc.; a transesterification method in which transesterification reaction is caused between a dimethyl ester (including a methyl ester, etc., of another dicarboxylic acid as necessary) of furandicarboxylic acid and ethylene glycol (including another glycol component, etc., as necessary); or the like. When the moisture content of the obtained polyester resin composition is high, it is preferable to dry the polyester resin composition at normal temperature or by using hot air in order to decrease the moisture content. A commercial product may be used as the polyester resin composition.

Subsequently, a crystallization process is performed on the polyester resin composition. Specifically, the polyester resin composition and an inert gas in a supercritical state are caused to coexist, and subjected to heat treatment, and then, pressure reduction is performed from a gas pressure in the supercritical state to an atmospheric pressure, whereby the polyester resin composition of the present invention can be obtained. In the following, the polyester resin composition before the crystallization process (before the heat treatment) will be described as "polyester resin material", so as to be distinguished from the polyester resin composition after the crystallization process (the polyester resin composition of the present invention).

Since the inert gas dissolves into and plasticizes the polyester resin material, the crystallization behavior during the treatment using the inert gas under a high pressure is different from the crystallization behavior under a normal atmospheric pressure. Therefore, the heat treatment temperature is set to be preferably the crystallization temperature - 70°C to the crystallization temperature + 10°C, more preferably the crystallization temperature - 60°C to the crystallization temperature, further preferably the crystallization temperature - 35°C or more and the crystallization temperature - 5°C or less, particularly preferably the crystallization temperature - 30°C or more and the crystallization temperature - 10°C or less, and most preferably the crystallization temperature - 25°C or more and the crystallization temperature - 15°C or less. The measurement method for the crystallization temperature will be described later.

The inert gas is not particularly limited as long as the inert gas does not activate the polyester resin material. Examples thereof include oxygen, methane, propane, nitrogen dioxide, nitrogen, argon, helium, carbon dioxide, and the like. Among them, carbon dioxide is preferably used. Depending on the compound, carbon dioxide may react and cannot be used as the inert gas. However, in the present specification, "inert gas" means a gas that does not activate the polyester resin composition.

When the pressure during the heat treatment is high, the inert gas dissolves into and plasticizes the polyester resin material, and as a result, crystallization in a short time is possible. Therefore, the pressure during the heat treatment is preferably 5 MPa or more, more preferably 8 Ma or more, further preferably 10 Ma or more, particularly preferably 15 Ma or more, and most preferably 18 Ma or more. The upper limit of the pressure during the heat treatment is not particularly limited, and is 50 MPa, for example. A reaction vessel that can endure a pressure exceeding 50 MPa needs to have a very large metal thickness, and thus is not realistic.

In order to make the pressure during the heat treatment higher than the atmospheric pressure, the following method may be adopted. That is, for example, the polyester resin material is put in a high-pressure reaction vessel, and the high-pressure reaction vessel is connected to a gas cylinder, a pump, a pressure relief valve, a pressure gauge, a safety valve, and the like. After the temperature of the high-pressure reaction vessel has been increased to a predetermined temperature, the inert gas is sent through the pump, and adjustment is performed by the pressure relief valve so as to attain a predetermined pressure.

In the polyester resin composition of the present invention, the heat treatment temperature is preferably 105 to 180°C and more preferably 135 to 165°C. When the heat treatment temperature is 105°C or more, the crystallinity of the resin composition is easily increased, and the heat resistance becomes excellent. On the other hand, when the heat treatment temperature is 180°C or less, the crystallinity easily becomes uniform between at the surface and in the interior of the resin composition.

The heat treatment time is preferably 10 minutes or more, more preferably 15 minutes or more, further preferably 20 minutes or more, and particularly preferably 25 minutes or more. If the heat treatment time is 10 minutes or more, the inert gas can be sufficiently dissolved into the polyester resin material. The heat treatment time is not particularly limited, and, the heat treatment time is, for example, 200 minutes or less, preferably 180 minutes or less, and more preferably 150 minutes or less. If the heat treatment time exceeds 200 minutes, the effect of increasing the crystallinity becomes saturated.

A time necessary for pressure reduction from a gas pressure in the supercritical state to an atmospheric pressure is preferably from 0.5 minutes to 20 minutes, more preferably from 1.5 minutes to 10 minutes, and further preferably from 3 minutes to 5 minutes.

A rate at which pressure is reduced from a gas pressure in the supercritical state to an atmospheric pressure is preferably from 1 MPa/min to 30 MPa/min, more preferably from 2 MPa/min to 25 MPa/min, further preferably from 3 MPa/min to 15 MPa/min, particularly preferably from 4 MPa/min to 10 MPa/min, and most preferably from 5 MPa/min to 7 MPa/min.

The present application claims the benefit of priority to Japanese Patent Application No. 2022-161069 filed on October 5, 2022 and Japanese Patent Application No. 2022-161070 filed on October 5, 2022. The entire contents of the specifications of Japanese Patent Application No. 2022-161069 filed on October 5, 2022 and Japanese Patent Application No. 2022-161070 filed on October 5, 2022 are hereby incorporated by reference.

EXAMPLES

Hereinafter, the present invention will be specifically described by means of examples, but the present invention is not limited to these examples. The evaluation methods used in the examples and comparative examples are as follows.

(1) Intrinsic viscosity

A polyester resin material was crushed and dried. Then, the above polyester resin was dissolved so as to have a concentration of 0.4 g/dl into a mixed solvent of parachlorophenol/tetrachloroethane = 75/25 (mass ratio), to obtain a solution. Using an Ubbelohde viscometer, the flow-down time of the above solution and the flow-down time of the above mixed solvent were measured, and from the time ratio thereof, the intrinsic viscosity of the polyester resin was calculated by using the Huggins' formula. The intrinsic viscosity of the polyester resin was calculated assuming the Huggins' constant to be 0.38.

(2) Melting point, glass transition temperature, and crystallization temperature

Using DSC6200 manufactured by Seiko Instruments Inc., the melting point, the glass transition temperature, and the crystallization temperature of the polyester resin material were measured.

(3) Melting heat amount ΔHm, cold crystallization heat amount ΔHc, and crystallinity Xc

Using DSC6200 manufactured by Seiko Instruments Inc., in accordance with JIS K7122, the temperature was increased from 25°C to 300°C at a temperature increase rate of 10°C/minute in a nitrogen atmosphere, and the melting heat amount ΔHm (J/g) and the cold crystallization heat amount ΔHc (J/g) in the process of increasing the temperature of pellets were obtained. The value of the complete crystal melting heat amount $\Delta Hm^0$ (J/g) was assumed to be 137 J/g as described above, and the crystallinity Xc (%) was calculated according to the formula below. Then, the average of the melting heat amount ΔHm of three pellets was calculated to be used as the melting heat amount ΔHm of the resin composition. With respect to the cold crystallization heat amount ΔHc and the crystallinity Xc as well, the average value was calculated in a similar manner. As the pellets, except for Comparative Example 3, pellets (polyester resin composition) after the crystallization process were used, and this also applies to the measurements in (4) and thereafter.

$$Xc = 100 \times (\Delta Hm - \Delta Hc)/\Delta Hm^0$$

(4) Crystal uniformity

Using the Fourier transform infrared absorption spectrum (FT-IR) ATR (attenuated total reflection) method, an absorption appearing at around 1340 cm$^{-1}$ due to deformation vibration of $CH_2$ (trans configuration) of ethylene glycol, and an absorption appearing at around 1580 cm$^{-1}$, derived from the furan ring, and having little change due to the crystalline property were measured, and the crystalline property at the surface or at a depth of 1 mm from the surface was quantified to indicate the crystal uniformity. Specifically, the absorbance peak heights $I_1$ to $I_4$ of the polyester resin composition were measured, and the difference between $I_1/I_2$ and $I_3/I_4$ ($|I_1/I_2-I_3/I_4|$) was calculated.

$I_1$: an absorbance peak height at around 1340 cm$^{-1}$ at a surface of the pellet
$I_2$: an absorbance peak height at around 1580 cm$^{-1}$ at the surface of the pellet
$I_3$: an absorbance peak height at around 1340 cm$^{-1}$ at a depth of 1 mm from the surface of the pellet
$I_4$: an absorbance peak height at around 1580 cm$^{-1}$ at a depth of 1 mm from the surface of the pellet

The FT-IR ATR measurement was performed under the conditions below.

FT-IR apparatus: Cary 660 FTIR manufactured by Agilent Technologies, Inc.
Single reflection ATR (total reflection measurement method) attachment: MKII Golden Gate manufactured by Specac Ltd.
Internal reflection element: diamond
Incidence angle: 45°
Resolution: 4 cm$^{-1}$
Number of times of integration: 32 times

(5) Impact resistance test

A crushing rod and a sample were put in a polycarbonate tube having a length of 70 mm and a diameter of 20 mm, and the vessel was closed with a stainless lid, and then shaken 150 times. As the crushing rod, a stainless column having a length of about 50 mm and a diameter of 10 mm was put in, and as the sample, ten cylinder-shaped pellets having a length of about 3 mm and a diameter of about 2 mm obtained in Example/Comparative Example were put in. After the shaking, the pellets were taken out, the shape retention rate of each pellet was calculated by using the formula below, and the impact resistance was evaluated according to the indexes below.

A: seven or more pellets have a shape retention rate of 80% or more.
B: five to six pellets have a shape retention rate of 80% or more.
C: four or less pellets have a shape retention rate of 80% or more.

Resin pellet shape retention rate (%) = volume of pellet after shaking ÷ volume of pellet before shaking × 100

(6) Apparent density

The mass and the volume of the pellet were measured and the apparent density was calculated by using the formula below. **In** the measurement, the apparent density was calculated by using ten pellets, and the average of the apparent density of eight pellets excluding those having the upper limit value and the lower limit value was regarded as the apparent density of the resin composition.

$$\text{Apparent density (g/cm}^3) = \text{mass (g)/volume(cm}^3)$$

(7) Fusion

5 g of pellets were put in a 10 mL glass vial, and the resultant vial was subjected to heat treatment at 120°C in a nitrogen atmosphere for one hour. Then, the temperature was cooled to room temperature, the pellets were taken out, and the fusion property was evaluated according to the indexes below.

A: there is no fusion between pellets and pellets can be taken out one by one.
B: slight fusion between pellets is observed, but pellets can be easily separated and taken out one by one.
C: fusion between pellets is observed, and pellets cannot be taken out one by one.

(Example 1)

A polyester resin material, which was cylinder-shaped pellets having a length of about 3 mm and a diameter about 2 mm, was prepared by the production method below.
To a starting mixture of ethylene glycol (EG) and 2,5-furandicarboxylic acid (FDCA) (the molar ratio of EG/FDCA was 1.5), 149 ppm of tetraethylammonium hydroxide (calculated as the mole ppm of $N(Et)_4OH$ on the basis of the molar amount of FDCA) was added. Next, while the temperature of the mixture was gradually increased from 80°C to 220°C, esterification was performed for 3.2 hours, a volatile compound such as water was distilled out, and then, a polycondensation catalyst and a phosphorus compound were added. As the polycondensation catalyst, an ethylene glycol solution of basic aluminum acetate was added, and as the phosphorus compound, an ethylene glycol solution of diethyl 3,5-di-tert-butyl-4-hydroxybenzylphosphonate was added. To the molar amount of FDCA in the starting mixture, the ethylene glycol solution of basic aluminum acetate and the ethylene glycol solution of diethyl 3,5-di-tert-butyl-4-hydroxybenzylphosphonate were added such that the amount of aluminum was 202 ppm, and the amount of diethyl 3,5-di-tert-butyl-4-hydroxybenzylphosphonate was 435 ppm. The temperature of the mixed solution to which the ethylene glycol solutions were added was increased from 220°C to 270°C, the pressure was reduced to 1 mmHg (about 133 Pa), and initial-stage polycondensation was performed for 60 minutes. Further, late-stage polycondensation was performed at about 13 Pa and 270°C for 119 minutes. At the end of polycondensation, the pressure was made to be normal pressure, and the polycondensate was passed in a strand shape through water, was cooled, and then cut. Accordingly, a polyester resin material, which was cylinder-shaped pellets having a length of about 3 mm and a diameter of about 2 mm, was obtained.

The above polyester resin material is a polymer composed of furandicarboxylic acid component-derived units, ethylene glycol component-derived units, and diethylene glycol component-derived units (4.0 mol% with respect to the total glycol component-derived units). **In** the polyester resin material, the amount of aluminum atoms derived from the catalyst component was 30 ppm, the amount of phosphorus atoms derived from the catalyst aid component was 74 ppm, the intrinsic viscosity was 0.62 dL/g, the crystallization temperature was 170°C, the melting point was 215°C, the glass transition temperature was 86°C, and the crystallinity was 3%.

The obtained polyester resin material was dried under reduced pressure (1 Torr) at 80°C for 12 hours, and then, 4 g of the resultant matter was weighed and put into a 10 mL reaction vessel. At the time point of the above putting, the reaction vessel had been preheated to a temperature close to 150°C. Carbon dioxide was sent to the reaction vessel at a flow rate of 5 mL/min from a pump connected to a carbon dioxide cylinder, the pressure in the reaction vessel was adjusted so as to be 20 MPa after 3 minutes with a pressure relief valve, and then the crystallization process was performed at 150°C for 30 minutes. After the crystallization process, the pressure in the reaction vessel was reduced, at a pressure reduction rate of 5 MPa/min, to the atmospheric pressure, to obtain a polyester resin composition. Without the vessel being cooled, the polyester resin composition was taken out of the reaction vessel and was cooled to normal temperature, and then physical property evaluation was performed. The evaluation result is shown in Table 1.

(Examples 2 to 9)

A polyester resin composition was obtained in the same manner as in Example 1 except that the processing condition was changed as shown in Table 1. The evaluation result is shown in Table 1.

(Comparative Example 1)

A polyester resin material obtained by the production method described in Example 1 was dried under reduced pressure (1 Torr) at 80°C for 12 hours, and 4 g of the resultant matter was weighed and put into a 10 mL reaction vessel. The reaction vessel was filled with air and the pressure was the atmospheric pressure. Then, the reaction vessel was heated to 150°C, and then the crystallization process was performed for 180 minutes, to obtain a polyester resin composition. The polyester resin composition was taken out of the reaction vessel, and physical property evaluation was performed. The evaluation result is shown in Table 1.

(Comparative Example 2)

A resin composition was obtained in the same manner as in Comparative Example 1 except that the time for the crystallization process was set to 240 minutes. The evaluation result is shown in Table 1.

(Comparative Example 3)

A polyester resin material obtained by the production method described in Example 1 was dried under reduced pressure (1 Torr) at 100°C for 24 hours, and then physical property evaluation was performed. The evaluation result is shown in Tablle 1.

[Table 1]

| | | Unit | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|---|---|
| Dry process | Temperature | (°C) | 80 | 80 | 80 | 80 | 80 | 80 | 80 | 80 | 80 | 80 | 80 | 100 |
| | Pressure | (Torr) | 1 | 1 | 1 | 1 | 1 | 1 | 1 | 1 | 1 | 1 | 1 | 1 |
| | Time | (hr) | 12 | 12 | 12 | 12 | 12 | 12 | 12 | 12 | 12 | 12 | 12 | 24 |
| Crystallization process | Atmosphere | (-) | carbon dioxide | carbon dioxide | carbon dioxide | carbon dioxide | carbon dioxide | carbon dioxide | carbon dioxide | carbon dioxide | carbon dioxide | air | air | - |
| | Temperature | (°C) | 150 | 150 | 150 | 150 | 150 | 130 | 170 | 110 | 110 | 150 | 150 | - |
| | Pressure | (MPa) | 20 | 20 | 20 | 10 | 6 | 20 | 20 | 20 | 20 | atmospheric pressure | atmospheric pressure | - |
| | Time | (min) | 30 | 60 | 120 | 60 | 120 | 30 | 30 | 30 | 30 | 180 | 240 | - |
| | Pressure reduction rate | (MPa/min) | 5 | 5 | 5 | 5 | 5 | 5 | 5 | 5 | 20 | - | - | - |
| | Time for the pressure reduction | (min) | 4 | 4 | 4 | 2 | 1.2 | 4 | 4 | 4 | 1 | - | - | - |
| Properties | Crystallinity | (%) | 24 | 27 | 28 | 23 | 25 | 13 | 13 | 11 | 11 | 26 | 28 | 2 |
| | DSC $\Delta Hm$ | (J/g) | 32 | 37 | 39 | 32 | 35 | 18 | 17 | 15 | 15 | 36 | 39 | 3 |
| | DSC $\Delta Hc$ | (J/g) | 0 | 0 | 0 | 0 | 0 | 0 | 0 | 0 | 0 | 0 | 0 | 0 |
| | IR-ATR Surface $(I_1/I_2)$ | (-) | 0.82 | 0.82 | 0.81 | 0.80 | 0.82 | 0.73 | 0.72 | 0.69 | 0.73 | 0.85 | 0.87 | 0.11 |
| | IR-ATR Interior $(I_3/I_4)$ | (-) | 0.83 | 0.84 | 0.83 | 0.80 | 0.81 | 0.69 | 0.65 | 0.63 | 0.54 | 0.58 | 0.60 | 0.23 |
| | IR-ATR Crystal uniformity | (-) | 0.01 | 0.02 | 0.02 | 0.00 | 0.01 | 0.04 | 0.07 | 0.06 | 0.19 | 0.27 | 0.27 | 0.12 |
| | Apparent density | (g/cm³) | 1.46 | 1.47 | 1.47 | 1.46 | 1.46 | 1.45 | 1.45 | 1.45 | 0.71 | 1.47 | 1.47 | 1.43 |
| | Impact resistance | (-) | A | A | A | A | A | A | A | A | B | C | C | C |
| | Fusion | (-) | A | A | A | A | A | B | B | B | B | A | A | C |

In Comparative Examples 1, 2, since the crystallization process was performed using air without using the inert gas, the crystalline property in the interior was significantly inferior to the crystalline property at the surface, and cracking and chipping were likely to occur in the pellets due to impact. In Comparative Examples 1, 2, although the inert gas was not used, the crystallization process itself was performed, and thus, fusion did not occur, different from Comparative Example 3.

In Comparative Example 3, even though drying under reduced pressure was performed for a long time at a high temperature, the crystallinity was substantially at the same level as that before the drying under reduced pressure, and thus, cracking and chipping were likely to occur in the pellets due to impact. In Comparative Example 3, the pellets were fused to each other.

INDUSTRIAL APPLICABILITY

The polyester resin composition of the present invention has a relatively high crystallinity, is crystallized also in the interior to substantially the same level as at the surface, and thus can be appropriately used in many industrial applications.

**Claims**

1. A polyester resin composition comprising a dicarboxylic acid component having furandicarboxylic acid as a main component, and a glycol component having ethylene glycol as a main component, the polyester resin composition having

   a crystallinity of 5% or more, and
   absorbance peak heights $I_1$ to $I_4$ in an infrared absorption spectrum that satisfy a formula below

   $$|I_1/I_2 - I_3/I_4| \leq 0.20$$

   (in the formula, $I_1$ represents an absorbance peak height at around 1340 cm$^{-1}$ at a surface of the polyester resin composition, $I_2$ represents an absorbance peak height at around 1580 cm$^{-1}$ at the surface of the polyester resin composition, $I_3$ represents an absorbance peak height at around 1340 cm$^{-1}$ at a depth of 1 mm from the surface of the polyester resin composition, and $I_4$ represents an absorbance peak height at around 1580 cm$^{-1}$ at a depth of 1 mm from the surface of the polyester resin composition).

2. The polyester resin composition according to claim 1, wherein the crystallinity is 10% or more.

3. The polyester resin composition according to claim 1 or 2, wherein the $I_3/I_4$ is 0.50 or more.

4. The polyester resin composition according to claim 1 or 2, having a melting heat amount ΔHm of 5 J/g or more.

5. A production method for a polyester resin composition including a dicarboxylic acid component having furandicarboxylic acid as a main component, and a glycol component having ethylene glycol as a main component, wherein a polyester resin material and an inert gas in a supercritical state are caused to coexist, and subjected to heat treatment at a crystallization temperature - 70°C to the crystallization temperature + 10°C.

6. The production method according to claim 5, wherein subsequently to the heat treatment, pressure reduction is performed from a gas pressure in the supercritical state to an atmospheric pressure, and a time necessary for the pressure reduction is 0.5 to 20 minutes.

7. The production method according to claim 5 or 6, wherein the polyester resin composition has absorbance peak heights $I_1$ to $I_4$ in an infrared absorption spectrum that satisfy a formula below

   $$|I_1/I_2 - I_3/I_4| \leq 0.20$$

   (in the formula, $I_1$ represents an absorbance peak height at around 1340 cm$^{-1}$ at a surface of the polyester resin composition, $I_2$ represents an absorbance peak height at around 1580 cm$^{-1}$ at the surface of the polyester resin

composition, $I_3$ represents an absorbance peak height at around 1340 cm$^{-1}$ at a depth of 1 mm from the surface of the polyester resin composition, and $I_4$ represents an absorbance peak height at around 1580 cm$^{-1}$ at a depth of 1 mm from the surface of the polyester resin composition).

8. The production method according to claim 5 or 6, wherein the polyester resin composition has a crystallinity of 5% or more.

9. The production method according to claim 7, wherein the $I_3/I_4$ is 0.50 or more.

10. The production method according to claim 5 or 6, wherein the polyester resin composition has a melting heat amount $\Delta Hm$ of 5 J/g or more.

## INTERNATIONAL SEARCH REPORT

| | International application No. |
|---|---|
| | **PCT/JP2023/032380** |

**A.    CLASSIFICATION OF SUBJECT MATTER**

   *C08G 63/88*(2006.01)i; *C08G 63/672*(2006.01)i
   FI:    C08G63/88; C08G63/672

According to International Patent Classification (IPC) or to both national classification and IPC

**B.    FIELDS SEARCHED**

Minimum documentation searched (classification system followed by classification symbols)

   C08G63/88; C08G63/672

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2019-529666 A (SULZER CHEMTECH AG) 17 October 2019 (2019-10-17) claims, paragraph [0091] | 5-6, 8, 10 |
| A | | 1-4, 7, 9 |
| Y | WO 2014/139602 A1 (SULZER CHEMTECH AG) 18 September 2014 (2014-09-18) claims | 5-6, 8, 10 |
| A | | 1-4, 7, 9 |
| A | JP 2010-241475 A (TOYO SEIKAN KAISHA LTD) 28 October 2010 (2010-10-28) | 1-10 |
| A | JP 2020-181153 A (TOYO BOSEKI) 05 November 2020 (2020-11-05) | 1-10 |
| A | WO 2014/185442 A1 (TOYO BOSEKI) 20 November 2014 (2014-11-20) | 1-10 |
| A | JP 2019-45623 A (CANON KK) 22 March 2019 (2019-03-22) | 1-10 |
| A | JP 11-507704 A (DSM N.V) 06 July 1999 (1999-07-06) | 1-10 |
| A | JP 2010-168530 A (SANYO CHEMICAL IND LTD) 05 August 2010 (2010-08-05) | 1-10 |

☑ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2023** | **21 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2023/032380** |

### C.    DOCUMENTS CONSIDERED TO BE RELEVANT

| Category* | Citation of document, with indication, where appropriate, of the relevant passages | Relevant to claim No. |
|---|---|---|
| A | JP 2016-522334 A (FURANIX TECHNOLOGIES B.V) 28 July 2016 (2016-07-28) | 1-10 |
| A | JP 2002-339266 A (ASAHI KASEI CORP) 27 November 2002 (2002-11-27) | 1-10 |
| A | JP 2004-183155 A (JAPAN SCIENCE & TECHNOLOGY AGENCY) 02 July 2004 (2004-07-02) | 1-10 |
| A | JP 2017-197733 A (KAO CORP) 02 November 2017 (2017-11-02) | 1-10 |
| A | JP 2013-252694 A (RESEARCH LABORATORY OF PLASTICS TECHNOLOGY CO LTD) 19 December 2013 (2013-12-19) | 1-10 |

Form PCT/ISA/210 (second sheet) (January 2015)

## INTERNATIONAL SEARCH REPORT
### Information on patent family members

International application No.

**PCT/JP2023/032380**

| Patent document cited in search report | | | Publication date (day/month/year) | Patent family member(s) | | | Publication date (day/month/year) |
|---|---|---|---|---|---|---|---|
| JP | 2019-529666 | A | 17 October 2019 | US | 2019/0233583 | A1 | |
| | | | | claims, paragraph [0110] | | | |
| | | | | US | 2021/0189061 | A1 | |
| | | | | WO | 2018/060241 | A1 | |
| | | | | WO | 2018/192743 | A1 | |
| | | | | EP | 3301091 | A1 | |
| | | | | EP | 3392288 | A1 | |
| | | | | TW | 201819461 | A | |
| | | | | CA | 3036621 | A1 | |
| | | | | KR | 10-2019-0065328 | A | |
| | | | | CN | 110023295 | A | |
| | | | | BR | 112019006360 | A | |
| | | | | MX | 2019003666 | A | |
| | | | | RU | 2019112783 | A | |
| | | | | KR | 10-2023-0006932 | A | |
| | | | | TW | 201841974 | A | |
| | | | | CA | 3060318 | A1 | |
| | | | | KR | 10-2019-0134803 | A | |
| | | | | CN | 111094386 | A | |
| | | | | BR | 112019022054 | A | |
| | | | | RU | 2019133643 | A | |
| | | | | JP | 2022-160407 | A | |
| | | | | JP | 2020-517768 | A | |
| WO | 2014/139602 | A1 | 18 September 2014 | JP | 2016-510084 | A | |
| | | | | claims | | | |
| | | | | JP | 2018-172689 | A | |
| | | | | US | 2016/0002397 | A1 | |
| | | | | US | 2017/0267812 | A1 | |
| | | | | KR | 10-2015-0132115 | A | |
| | | | | CN | 105229052 | A | |
| | | | | RU | 2015136801 | A | |
| | | | | BR | 112015018961 | A | |
| | | | | TW | 201446831 | A | |
| JP | 2010-241475 | A | 28 October 2010 | (Family: none) | | | |
| JP | 2020-181153 | A | 05 November 2020 | (Family: none) | | | |
| WO | 2014/185442 | A1 | 20 November 2014 | US | 2016/0090456 | A1 | |
| | | | | EP | 2998341 | A1 | |
| | | | | CN | 105229065 | A | |
| | | | | KR | 10-2016-0010490 | A | |
| | | | | TW | 201502158 | A | |
| JP | 2019-45623 | A | 22 March 2019 | (Family: none) | | | |
| JP | 11-507704 | A | 06 July 1999 | WO | 1997/000353 | A1 | |
| JP | 2010-168530 | A | 05 August 2010 | JP | 2010-168529 | A | |
| | | | | US | 2011/0060110 | A1 | |
| | | | | US | 2011/0144287 | A1 | |
| | | | | WO | 2009/142010 | A1 | |
| | | | | EP | 2287235 | A1 | |
| | | | | EP | 2305739 | A2 | |
| | | | | CN | 102037061 | A | |
| | | | | CN | 102174204 | A | |

Form PCT/ISA/210 (patent family annex) (January 2015)

## INTERNATIONAL SEARCH REPORT
### Information on patent family members

International application No.

**PCT/JP2023/032380**

| Patent document cited in search report | | | Publication date (day/month/year) | Patent family member(s) | | | Publication date (day/month/year) |
|---|---|---|---|---|---|---|---|
| JP | 2016-522334 | A | 28 July 2016 | US | 2016/0138193 | A1 | |
| | | | | WO | 2014/204313 | A1 | |
| | | | | CA | 2915810 | A1 | |
| | | | | KR | 10-2016-0021878 | A | |
| | | | | CN | 105452548 | A | |
| | | | | MX | 2015017378 | A | |
| | | | | BR | 112015031668 | A | |
| JP | 2002-339266 | A | 27 November 2002 | (Family: none) | | | |
| JP | 2004-183155 | A | 02 July 2004 | (Family: none) | | | |
| JP | 2017-197733 | A | 02 November 2017 | US | 2019/0144661 | A1 | |
| | | | | WO | 2017/188183 | A1 | |
| | | | | EP | 3450500 | A1 | |
| | | | | CN | 109071926 | A | |
| JP | 2013-252694 | A | 19 December 2013 | (Family: none) | | | |

Form PCT/ISA/210 (patent family annex) (January 2015)

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018159648 A
- JP 2022161069 A
- JP 2022161070 A

**Non-patent literature cited in the description**

- *Physical Chemistry Chemical Physics*, 2014, vol. 16, 7946-7958